# EUROPEAN PATENT SPECIFICATION

(11) **EP 4 019 258 B1**
(45) Date of publication and mention of the grant of the patent: **13.03.2024**
(21) Application number: 21216538.5
(22) Date of filing: 21.12.2021
(51) Int. Cl.: B41J 3/407, B41J 11/00

(54) **THREE-DIMENSIONAL OBJECT PRINTING APPARATUS AND THREE-DIMENSIONAL OBJECT PRINTING METHOD**
VORRICHTUNG ZUM DRUCKEN VON DREIDIMENSIONALEN OBJEKTEN UND VERFAHREN ZUM DRUCKEN VON DREIDIMENSIONALEN OBJEKTEN
APPAREIL ET PROCÉDÉ D'IMPRESSION D'OBJETS TRIDIMENSIONNELS

(30) Priority: 23.12.2020 JP 2020213283
(43) Date of publication of application: 29.06.2022
(73) Proprietor: Seiko Epson Corporation, Tokyo 160-8801 (JP)
(72) Inventor: NAKAMURA, Shinichi, Suwa-shi, 392-8502 (JP); KUMAGAI, Masaru, Suwa-shi, 392-8502 (JP); SUGAI, Keigo, Suwa-shi, 392-8502 (JP); HASEGAWA, Tomonaga, Suwa-shi, 392-8502 (JP); HIRATA, Koki, Suwa-shi, 392-8502 (JP)
(74) Representative: Lewis Silkin LLP

(56) References cited:
- JP-A- 2006 021 435
- US-A1- 2015 231 897

## Description

The present application is based on, and claims priority from JP Application Serial Number 2020-213283, filed December 23, 2020.

### BACKGROUND

### 1. Technical Field

Embodiments of the present disclosure relate to a three-dimensional object printing apparatus and a three-dimensional object printing method.

### 2. Related Art

**[0002.1]** US 2015/231897 A1 discloses an apparatus for the printing and radiation treatment of a curved surface of an object which includes a printing unit such as an inkjet print head, a radiation unit such as a UV dryer, and a movement unit, such as a robot, either for moving the printing unit and the radiation unit at a working distance along the surface or for moving the object at a working distance along the printing unit and the radiation unit. A shielding unit can be adjusted and/or deformed relative to the printing unit and/or relative to the radiation unit and during the printing.

**[0002.2]** JP 2006 021435 A discloses an image recorder which comprises a section for recording an image with UV-curing ink on a recording medium of three-dimensional profile being carried by a carrying section, a section for irradiating that image with UV-rays, a section for measuring the irradiation distance between the surface of the recording medium being carried by the carrying section and the UV-ray irradiating section, and a section for moving the UV-ray irradiating section reciprocatingly to approach the carrying section and to recede therefrom wherein the section moves the UV-ray irradiating section to sustain a constant irradiation distance measured by the distance measuring section.

A three-dimensional object printing apparatus that performs ink-jet printing on a surface of a three-dimensional object is known in the art. For example, a system disclosed in JP-T-2015-520011 includes a robot and a print head provided on the robot, and ejects ink droplets from the print head toward a curved surface of a vehicle.

JP-T-2015-520011 discloses that a curing head arranged adjacent to the print head on the robot is guided on the same track as that of the print head to cure the ink immediately after printing.

However, if a curing head is arranged near a print head, when the print head is brought to desired position and orientation in relation to a three-dimensional workpiece that is the target of printing, there is a risk of contact of the curing head with the workpiece. As explained here, there is a need for providing, near a print head, components such as a curing head and a distance measurement unit that perform actions on a workpiece or receive actions from the workpiece, but, on the other hand, it is demanded that these components should fulfill their respective functions and that the contact of these components with the workpiece should be prevented as much as possible. To meet the above demands, arranging components such as a curing head and a distance measurement unit near a print head optimally has been one of issues awaited to be solved.

### SUMMARY

According to an aspect of the present invention, there is provided a three-dimensional object printing apparatus according to claim 1.

According to another aspect of the present invention, there is provided a three-dimensional object printing apparatus according to claim 4.

Preferable features are set out in the remaining claims.

### BRIEF DESCRIPTION OF THE DRAWINGS

FIG. 1 is a schematic perspective view of a three-dimensional object printing apparatus and a workpiece according to a first embodiment.
FIG. 2 is a block diagram that illustrates the electric configuration of the three-dimensional object printing apparatus according to the first embodiment.
FIG. 3 is a schematic perspective view of the structure of a head unit according to the first embodiment.
FIG. 4 is a plan view of the structure of the head unit according to the first embodiment.
FIG. 5 is a side view depicting a positional relationship between the head unit and an arm according to the first embodiment.
FIG. 6 is a flowchart illustrating the flow of a three-dimensional object printing method according to the first embodiment.
FIG. 7A is a side view for explaining the setting of a route and a print operation according to the first embodiment.
FIG. 7B is a side view for explaining the setting of a route and a print operation according to the first embodiment.
FIG. 7C is a side view for explaining the setting of a route and a print operation according to the first embodiment.
FIG. 8 is a schematic perspective view of a three-dimensional object printing apparatus and a workpiece according to a second embodiment.
FIG. 9 is a plan view for explaining the setting of a route and a print operation according to the second embodiment.
FIG. 10 is a side view for explaining the setting of a route and a print operation according to a third embodiment.

### DESCRIPTION OF EXEMPLARY EMBODIMENTS

With reference to the accompanying drawings, some preferred embodiments of the present disclosure will now be described. The dimensions or scales of parts illustrated in the drawings may be different from actual dimensions or scales, and some parts may be schematically illustrated for easier understanding. The scope of the present disclosure shall not be construed to be limited to these specific examples unless and except where the description below contains an explicit mention of limiting the present disclosure.

The description below is given with reference to X, Y, and Z axes intersecting with one another. One direction along the X axis will be referred to as the X1 direction. The direction that is the opposite of the X1 direction will be referred to as the X2 direction. Similarly, directions that are the opposite of each other along the Y axis will be referred to as the Y1 direction and the Y2 direction. Directions that are the opposite of each other along the Z axis will be referred to as the Z1 direction and the Z2 direction.

The X, Y, and Z axes are coordinate axes of a base coordinate system set in a space in which a workpiece W described later and a pedestal 210 described later are disposed. Typically, the Z axis is a vertical axis, and the Z2 direction corresponds to a vertically downward direction. The Z axis does not necessarily have to be a vertical axis. The X, Y, and Z axes are typically orthogonal to one another, but are not limited thereto, meaning that they could be mutually non-orthogonal axes. For example, it is sufficient as long as the X, Y, and Z axes intersect with one another within an angular range of 80° or greater and 100° or less.

### 1. First Embodiment

### 1-1. Overview of Three-dimensional Object Printing Apparatus

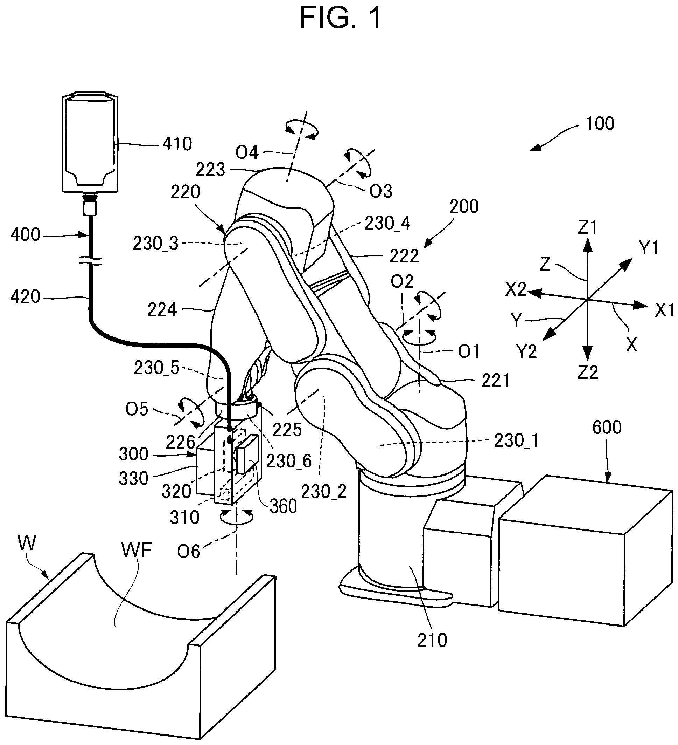

FIG. 1 is a schematic perspective view of a three-dimensional object printing apparatus 100 according to an exemplary embodiment. The three-dimensional object printing apparatus 100 is an apparatus that performs ink-jet printing on a surface of a three-dimensional workpiece W.

The workpiece W has a surface WF on which printing is to be performed. In the example illustrated in FIG. 1, the surface WF is a curved concave surface having a plurality of portions with different curvatures. The size, shape, placement orientation, etc. of the workpiece W is not limited to the example illustrated in FIG. 1. The workpiece W may have any size, shape, placement orientation, etc.

In the example illustrated in FIG. 1, the three-dimensional object printing apparatus 100 is an ink-jet printer that uses a vertical articulated robot. Specifically, as illustrated in FIG. 1, the three-dimensional object printing apparatus 100 includes a robot 200, a head unit 300, a liquid supply unit 400, and a controller 600. First, a brief explanation of each component of the three-dimensional object printing apparatus 100 illustrated in FIG. 1 will now be given below sequentially.

The robot 200 is an example of a movement mechanism that changes the relative position and relative orientation of the workpiece W and the head unit 300. In the example illustrated in FIG. 1, the robot 200 is a so-called six-axis vertical articulated robot. Specifically, the robot 200 includes a pedestal 210 and an arm unit 220.

The pedestal 210 is a base that supports the arm unit 220. In the example illustrated in FIG. 1, the pedestal 210 is fastened with screws, etc. to an installation plane such as a floor facing in the Z1 direction. The installation plane to which the pedestal 210 is fixed may be oriented in any direction. For example, the pedestal 210 may be installed on a wall, on a ceiling, on the surface of a wheeled platform, or the like, without any limitation to the example illustrated in FIG. 1.

The arm unit 220 is a six-axis robot arm module that has a base end mounted on the pedestal 210 and a distal end whose position and orientation are configured to change threedimensionally in relation to the base end. Specifically, the arm unit 220 includes arms 221, 222, 223, 224, 225, and 226, which are coupled to one another sequentially in this order.

The arm 221 is coupled to the pedestal 210 via a joint 230_1 in such a way as to be able to rotate around a first rotation axis O1. The arm 222 is coupled to the arm 221 via a joint 230_2 in such a way as to be able to rotate around a second rotation axis O2. The arm 223 is coupled to the arm 222 via a joint 230_3 in such a way as to be able to rotate around a third rotation axis O3. The arm 224 is coupled to the arm 223 via a joint 230_4 in such a way as to be able to rotate around a fourth rotation axis O4. The arm 225 is coupled to the arm 224 via a joint 230_5 in such a way as to be able to rotate around a fifth rotation axis O5. The arm 226 is coupled to the arm 225 via a joint 230_6 in such a way as to be able to rotate around a sixth rotation axis O6. In the description below, each of the joints 230_1 to 230_6 may be referred to as the joint 230 without making any distinction therebetween.

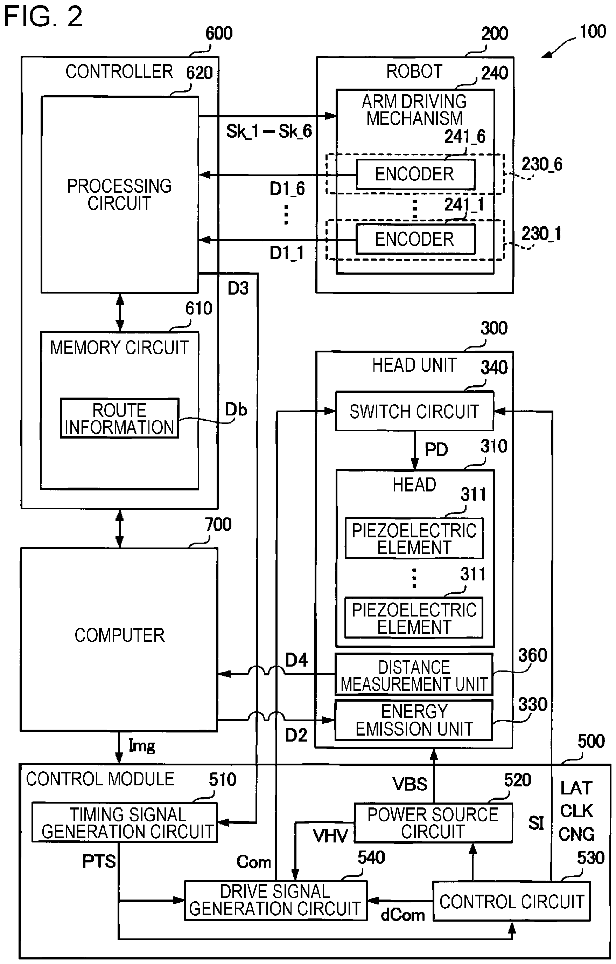

The joint 230 is an example of a movable portion. In the example illustrated in FIG. 1, the number of the joints 230 is six. In the example illustrated in FIG. 1, each of the joints 230_1 to 230_6 is a mechanism that couples one of two mutually-adjacent arms to the other in a rotatable manner. On each of the joints 230_1 to 230_6, a driving mechanism that causes one of two mutually-adjacent arms to rotate in relation to the other is provided, though not illustrated in FIG. 1. The driving mechanism includes, for example, a motor that generates a driving force for causing the rotation, a speed reducer that performs speed reduction on the driving force and outputs the reduced force, and an encoder such as a rotary encoder that measures the amount of operation such as the angle of the rotation. The aggregate of the driving mechanisms described above corresponds to an arm driving mechanism 240 illustrated in FIG. 2. The arm driving mechanism 240 will be described later. The encoders described above correspond to encoders 241 illustrated in FIG. 2. The encoders 241 will be described later.

The first rotation axis O1 is an axis that is perpendicular to the non-illustrated installation plane to which the pedestal 210 is fixed. The second rotation axis O2 is an axis that is perpendicular to the first rotation axis O1. The third rotation axis O3 is an axis that is parallel to the second rotation axis O2. The fourth rotation axis O4 is an axis that is perpendicular to the third rotation axis O3. The fifth rotation axis O5 is an axis that is perpendicular to the fourth rotation axis O4. The sixth rotation axis O6 is an axis that is perpendicular to the fifth rotation axis O5.

With regard to these rotation axes, the meaning of the word "perpendicular" is not limited to a case where the angle formed by two rotation axes is exactly 90°. In addition to such exact perpendicularity, the meaning of the word "perpendicular" encompasses cases where the angle formed by two rotation axes is within a range of approximately ±5° from 90°. Similarly, the meaning of the word "parallel" is not limited to a case where two rotation axes are exactly parallel to each other, but also encompasses cases where one of the two rotation axes is inclined with respect to the other within a range of approximately ±5°.

The head unit 300 is mounted as an end effector on the distal end of the arm unit 220 described above, that is, on the arm 226.

The head unit 300 is a device that includes a head 310, an energy emission unit 330, and a distance measurement unit 360. The head 310 ejects ink, which is an example of liquid, toward the workpiece W. The energy emission unit 330 cures the ink that has been ejected from the head 310 onto the workpiece W. The energy emission unit 330 is an example of a curing unit. The distance measurement unit 360 measures the distance from the head unit 300 to the workpiece W. The distance measurement unit 360 is an example of a distance measurement unit. In addition to the head 310, the energy emission unit 330, and the distance measurement unit 360, in the present embodiment, the head unit 300 includes a pressure adjustment valve 320 that adjusts the pressure of ink supplied to the head 310. Since these components are fixed to the arm 226, their positions and orientations in relation to one another are fixed.

Since a vertical articulated robot is used as the movement mechanism in the three-dimensional object printing apparatus 100, it is possible to set a positional relationship between the head unit 300 and the workpiece W as desired and to perform printing on the target surface of the workpiece W.

The ink is not limited to any specific kind of ink. Examples of the ink include water-based ink in which a colorant such as dye or pigment is dissolved in a water-based dissolvent (solvent), curable ink using curable resin such as UV (ultraviolet) curing resin, solvent-based ink in which a colorant such as dye or pigment is dissolved in an organic solvent. Among them, curable ink can be used as a preferred example. The curable ink is not limited to any specific kind of curable ink. For example, any of thermosetting-type ink, photo-curable-type ink, radiation-curable-type ink, electron-beam-curable-type ink, and the like, may be used. A preferred example is photo-curable-type ink such as UV curing ink. The ink is not limited to a solution and may be formed by dispersion of a colorant or the like as a dispersoid in a dispersion medium. The ink is not limited to ink containing a colorant; instead of a colorant, the ink may contain, as a dispersoid, conductive particles such as metal particles for forming wiring lines, etc.

The head 310 includes a head chip inside, though not illustrated in FIG. 1. The head chip includes piezoelectric elements, cavities for containing ink, and nozzles N that are in communication with the cavities. Each of the piezoelectric elements is provided for the corresponding one of the cavities and causes a change in pressure inside the corresponding one of the cavities. Due to the change in pressure, ink is ejected from the nozzle N corresponding to this one of the cavities. The head chip described above can be manufactured by, for example, preparing a plurality of substrates such as silicon substrates using a processing technique such as etching and then bonding the substrates together by means of an adhesive. The nozzles N are formed in a nozzle plate 312, which will be described later. The nozzle plate 312 is one of the substrates that constitute the head chip. The piezoelectric elements described above correspond to piezoelectric elements 311 illustrated in FIG. 2. The piezoelectric elements 311 will be described later. Instead of the piezoelectric element, a heater that heats ink inside the cavity may be used as a driving element for ejecting ink from the nozzle N.

The pressure adjustment valve 320 is a valve mechanism that opens and closes in accordance with the pressure of ink inside the head 310. The opening and closing of this valve mechanism keeps the pressure of ink inside the head 310 within a predetermined negative pressure range. Keeping such negative ink pressure stabilizes ink meniscus formed in each nozzle N of the head 310. Meniscus stability prevents external air from entering the nozzles N in the form of air bubbles and prevents ink from spilling out of the nozzles N.

In the example illustrated in FIG. 1, the head unit 300 has a single head 310 and a single pressure adjustment valve 320. However, the number of the head(s) 310 of the head unit 300 is not limited one, and the number of the pressure adjustment valve(s) 320 of the head unit 300 is not limited one. The head unit 300 may have two or more heads 310 and/or two or more pressure adjustment valves 320. The position where the pressure adjustment valve 320 is provided is not limited to the arm 226. For example, the pressure adjustment valve 320 may be provided on any other arm, etc. The pressure adjustment valve 320 may be provided at a fixed position with respect to the pedestal 210.

The energy emission unit 330 emits energy by means of which ink can be cured, for example, light, heat, an electron beam, a radiation beam, or the like, depending on the type of the ink. For example, if UV-curable ink is used, the energy is ultraviolet light. The energy emission unit 330 has a configuration suitable for the type of the energy. For example, if the energy is ultraviolet light, the energy emission unit 330 includes a light source such as light emitting elements configured to emit ultraviolet light, for example, ultraviolet light emitting diodes (UV LEDs). The energy emission unit 330 may include optical components such as lenses for adjusting the direction in which the energy is emitted, the range of energy emission, or the like.

Ink cures by receiving the energy emitted from the energy emission unit 330. The concept of the term "curing" as used herein includes but not limited to the following various modes of curing: curable resin such as thermosetting resin or photo-curable resin, etc. cures due to reaction, for example, polymerization reaction; a solid derived from a solute is obtained as a result of removing a solvent from a solution; a solid derived from a dispersoid is obtained as a result of removing a dispersion medium from a dispersion liquid.

Preferably, the intensity of energy emitted by the energy emission unit 330 may be adjustable. If adjustable, it is possible to reduce the risk of the clogging of nozzles by decreasing the intensity of the energy during a print operation described later, and it is possible to shorten the time taken for the curing or solidification of ink by increasing the intensity of the energy during a curing operation described later.

**The** distance measurement unit 360 measures the distance between the distance measurement unit 360 and the workpiece W by emitting an electromagnetic wave or a sound wave toward the workpiece W and then by detecting the electromagnetic wave or the sound wave reflected from the workpiece W. For example, a laser displacement meter or an ultrasonic sensor can be used as the distance measurement unit 360. Another example of the distance measurement unit 360 is a three-dimensional vision camera.

The liquid supply unit 400 is a mechanism for supplying ink to the head 310. The liquid supply unit 400 includes a liquid containing portion 410 and a supply flow passage 420.

The liquid containing portion 410 is a container that contains ink. The liquid containing portion 410 is, for example, a bag-type ink pack made of a flexible film material.

In the example illustrated in FIG. 1, the liquid containing portion 410 is fixed to a wall, a ceiling, a pillar, or the like to ensure that it is always located at a relatively Z1-directional position in comparison with the position of the head 310. That is, in the vertical direction, the liquid containing portion 410 is located above the movement area of the head 310. Therefore, it is possible to supply ink from the liquid containing portion 410 to the head 310 with a predetermined pressure magnitude without any need for using a mechanism such as a pump.

The supply flow passage 420 is a flow passage through which ink is supplied from the liquid containing portion 410 to the head 310. The pressure adjustment valve 320 is provided somewhere between the ends of the supply flow passage 420. Therefore, even when a positional relationship between the head 310 and the liquid containing portion 410 changes, it is possible to reduce a change in pressure of ink inside the head 310.

The controller 600 is a robot controller that controls the driving of the robot 200. The functions of the controller 600 and connection relationships between the controller 600 and other components that are not illustrated in FIG. 1, etc. will be described later.

### 1-2. Electric Configuration of Three-dimensional Object Printing Apparatus

FIG. 2 is a block diagram that illustrates the electric configuration of the three-dimensional object printing apparatus 100 according to the first embodiment. In FIG. 2, among the components of the three-dimensional object printing apparatus 100, electric components are illustrated. In addition, the arm driving mechanism 240 including the encoders 241_1 to 241_6 is illustrated in FIG. 2. The arm driving mechanism 240 is the aforementioned aggregate of the driving mechanisms configured to operate the joints 230_1 to 230_6. Each of the encoders 241_1 to 241_6 is provided for the corresponding one of the joints 230_1 to 230_6 and is configured to measure the amount of operation such as the angle of rotation of the corresponding one of the joints 230_1 to 230_6. In the description below, each of the encoders 241_1 to 241_6 may be referred to as the encoder 241 without making any distinction therebetween.

As illustrated in FIG. 2, besides the above-described robot 200, the above-described head unit 300, and the above-described controller 600, the three-dimensional object printing apparatus 100 includes a control module 500 and a computer 700. In the present embodiment, the computer 700 is communicably connected to the controller 600 and the control module 500. Moreover, the controller 600 and the control module 500 are electrically connected to each other not via the computer 700 such that a signal D3, which will be described later, can be communicated directly therebetween. Any of the electric components may be split into two or more sub components as needed. A part of one electric component may be included in another electric component. One electric component may be integrated with another electric component.

The controller 600 has a function of controlling the driving of the robot 200 and a function of generating the signal D3 for synchronizing the ejecting operation of the head 310 with the kinematic operation of the robot 200. The controller 600 includes a memory circuit 610 and a processing circuit 620.

The memory circuit 610 stores various programs that are to be run by the processing circuit 620 and various kinds of data that are to be processed by the processing circuit 620.

Route information Db is stored in the memory circuit 610. The route information Db is information that indicates a path along which the head unit 300 should move. The route information Db is expressed using, for example, the coordinate values of the aforementioned base coordinate system. The route information Db is determined based on workpiece information that indicates the position and shape of the workpiece W. The workpiece information is obtained by associating information such as CAD (computer-aided design) data that indicates the three-dimensional shape of the workpiece W with the aforementioned base coordinate system. The route information Db described above is inputted from the computer 700 into the memory circuit 610.

The processing circuit 620 controls the operation of the joints 230_1 to 230_6 based on the route information Db, and generates the signal D3. Specifically, the processing circuit 620 performs inverse kinematics calculation that is a computation for converting the route information Db into the amount of operation such as the angle of rotation and the speed of rotation, etc. of each of the joints 230_1 to 230_6. Then, based on respective outputs D1_1 to D1_6 from the encoders 241_1 to 241_6 included in the arm driving mechanism 240 of the robot 200, the processing circuit 620 outputs control signals Sk_1 to Sk_6 such that the actual amount of operation such as the actual angle of rotation and the actual speed of rotation, etc. of each of the joints 230_1 to 230_6 will be equal to the result of the computation. The control signals Sk_1 to Sk_6 correspond to the joints 230_1 to 230_6 respectively. By means of each of these control signals, the driving of the motor provided on the corresponding joint 230 is controlled. The outputs D1_1 to D1_6 correspond to the encoders 241_1 to 241_6 respectively. In the description below, each of the outputs D1_1 to D1_6 may be referred to as the output D1 without making any distinction therebetween.

Based on the output(s) D1 from at least one of the encoders 241_1 to 241_6, the processing circuit 620 generates the signal D3. For example, the processing circuit 620 generates the signal D3 as a trigger signal at a point in time at which the value of the output D1 from the one encoder 241 among the encoders 241_1 to 241_6 becomes a predetermined value.

The control module 500 is a circuit that controls, based on the signal D3 outputted from the controller 600 and print data Img outputted from the computer 700, the ejecting operation of the head 310. The control module 500 includes a timing signal generation circuit 510, a power source circuit 520, a control circuit 530, and a drive signal generation circuit 540.

Being triggered by the signal D3, the timing signal generation circuit 510 generates a timing signal PTS. The timing signal PTS is a signal that specifies the timing of the ejecting operation of the head 310. The timing signal PTS is generated by a timer that is included in the timing signal generation circuit 510.

The power source circuit 520 receives supply of external power from a commercial power source that is not illustrated, and generates various voltages having predetermined levels. The various voltages generated by the power source circuit 520 are supplied to the components, etc. of the three-dimensional object printing apparatus 100. For example, the power source circuit 520 generates a power voltage VHV and an offset voltage VBS. The offset voltage VBS is supplied to the head unit 300. The power voltage VHV is supplied to the drive signal generation circuit 540.

Based on the timing signal PTS, the control circuit 530 generates a control signal SI, a waveform specifying signal dCom, a latch signal LAT, a clock signal CLK, and a change signal CNG. These signals are in synchronization with the timing signal PTS. Among these signals, the waveform specifying signal dCom is inputted into the drive signal generation circuit 540. The rest of them are inputted into a switch circuit 340 of the head unit 300.

The control signal SI is a digital signal for specifying the operation state of each piezoelectric element 311 of the head 310. The waveform specifying signal dCom is a digital signal for specifying the waveform of a drive signal Com, which will be described later. The latch signal LAT and the change signal CNG are used together with the control signal SI and specify the timing of ejection of ink from the nozzle N. The clock signal CLK serves as a reference clock that is in synchronization with the timing signal PTS.

The drive signal generation circuit 540 is a circuit that generates the above-mentioned drive signal Com for driving each piezoelectric element 311 of the head 310. Specifically, the drive signal generation circuit 540 includes, for example, a DA conversion circuit and an amplification circuit. In the drive signal generation circuit 540, the DA conversion circuit converts the format of the waveform specifying signal dCom supplied from the control circuit 530 from a digital signal format into an analog signal format, and the amplification circuit amplifies the analog signal by using the power voltage VHV supplied from the power source circuit 520, thereby generating the drive signal Com. A drive pulse PD is a signal having, of the waveform included in the drive signal Com, a waveform supplied actually to the piezoelectric element 311. The drive pulse PD is supplied from the drive signal generation circuit 540 to the piezoelectric element 311 via the switch circuit 340. Based on the control signal SI, the switch circuit 340 switches whether or not to supply at least a part of the waveform included in the drive signal Com as the drive pulse PD.

The computer 700 has a function of supplying the route information Db to the controller 600 and a function of supplying the print data Img to the control module 500. The computer 700 according to the present embodiment is electrically connected to the energy emission unit 330 described earlier and, based on signals supplied from the controller 600 and the control module 500, outputs a signal D2 for controlling the driving of the energy emission unit 330. In addition, the computer 700 according to the present embodiment is electrically connected to the distance measurement unit 360 described earlier. The distance measurement unit 360 outputs distance information D4 to the computer 700. The controller 600 and the distance measurement unit 360 may be directly connected to each other. The function of the energy emission unit 330 and the function of the distance measurement unit 360 will be described later.

### 1-3. Head Unit

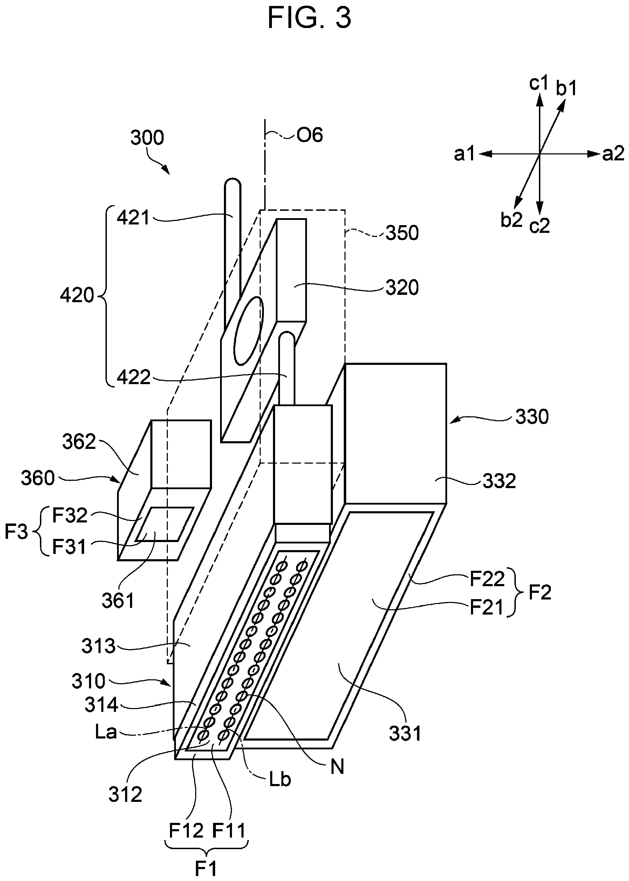

FIG. 3 is a schematic perspective view of the structure of the head unit 300 according to the first embodiment.

The description below is given with reference to a, b, and c axes intersecting with one another. One direction along the a axis will be referred to as the a1 direction. The direction that is the opposite of the a1 direction will be referred to as the a2 direction. Similarly, directions that are the opposite of each other along the b axis will be referred to as the b1 direction and the b2 direction. Directions that are the opposite of each other along the c axis will be referred to as the c1 direction and the c2 direction.

The a, b, and c axes are coordinate axes of a tool coordinate system set for the head unit 300. The relative position and relative orientation of the a, b, and c axes with respect to the X, Y, and Z axes described earlier change due to the operation of the robot 200 described earlier. In the example illustrated in FIG. 3, the c axis is parallel to the sixth rotation axis O6 described earlier. The a, b, and c axes are typically orthogonal to one another, but are not limited thereto. For example, it is sufficient as long as the a, b, and c axes intersect with one another within an angular range of 80° or greater and 100° or less.

As described earlier, the head unit 300 includes the head 310, the pressure adjustment valve 320, the energy emission unit 330, and the distance measurement unit 360. These components are supported by a support member 350 indicated by broken-line illustration in FIG. 3.

The support member 350 is made of, for example, a metal material, and is substantially rigid. In FIG. 3, the support member 350 has a low-profile box-like shape. However, the support member 350 may have any shape, without being limited to the illustrated example.

The support member 350 described above is mounted on the distal end of the arm unit 220 described earlier, that is, on the arm 226. Therefore, the positional relationship between the arm 226 and each of the head 310, the pressure adjustment valve 320, the energy emission unit 330, and the distance measurement unit 360 is fixed.

In the example illustrated in FIG. 3, the pressure adjustment valve 320 is located at a relatively c1-directional position with respect to the head 310. The energy emission unit 330 is located at a relatively a2-directional position with respect to the head 310. The distance measurement unit 360 is located at a relatively a1-directional position with respect to the head 310. A detailed positional relationship among the head 310, the energy emission unit 330, and the distance measurement unit 360 will be described later.

The supply flow passage 420 is demarcated into an upstream flow passage 421 and a downstream flow passage 422 by the pressure adjustment valve 320. That is, the supply flow passage 420 includes the upstream flow passage 421, which is a passage for communication between the liquid containing portion 410 and the pressure adjustment valve 320, and the downstream flow passage 422, which is a passage for communication between the pressure adjustment valve 320 and the head 310.

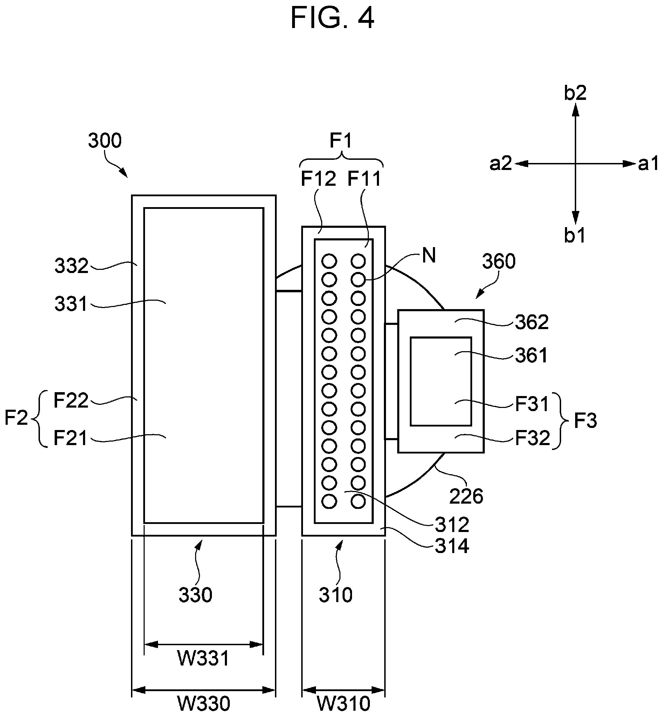

FIG. 4 is a plan view of the structure of the head unit 300 according to the present embodiment as viewed in the c1 direction.

As illustrated in FIGS. 3 and 4, in the present embodiment, the head 310 includes the nozzle plate 312, a casing portion 313, and a cover member 314. The nozzle plate 312 is a plate-like member that constitutes a part of the head chip described earlier. The nozzle plate 312 is made of silicon (Si) or metal. The plurality of nozzles N is provided on orifices of the nozzle plate 312. The casing portion 313 is a member that holds the head chip. The casing portion 313 is made of resin or metal. Internal flow passages through which ink is supplied to the head chip are formed inside the casing portion 313. The cover member 314 is a member that is made of metal and encloses the nozzle plate 312. The cover member 314 protects the nozzle plate 312.

The head 310 has an ejecting surface F1, on which the nozzles N are formed. The ejecting surface F1 is the surface of a portion constituting the nozzle plate 312 and a peripheral portion surrounding it. In another definition, the ejecting surface F1 is the face that is visible when the head 310 is viewed from the side toward which ink is ejected. The direction of ink ejection according to the present embodiment, namely, the direction in which the head 310 ejects ink, is the c2 direction. Ideally, the ejected ink goes in a direction perpendicular to the ejection surface and away from the ejection surface F1 and the head unit 300. That is the ejecting direction corresponds to c2. The meaning of "viewed from the side toward which ink is ejected" is that the head 310 is viewed in the c1 direction. The "portion constituting the nozzle plate 312 and a peripheral portion surrounding it" means a portion on the c2-side where the nozzle plate 312 is provided when the head 310 is virtually halved with respect to the c-axis direction.

The ejecting surface F1 may include a plurality of surfaces. The ejecting surface F1 according to the present embodiment includes a nozzle surface F11 and a cover surface F12. The nozzle surface F11 is the surface of the nozzle plate 312 normal to a line going in the direction along the c axis. Ink is ejected in the c2 direction from the plurality of nozzles N provided in the nozzle surface F11. The cover surface F12 is a surface normal to a line going in the direction along the c axis. The nozzle surface F11 is provided at the opening of the cover surface F12.

The position of the nozzle surface F11 in the c-axis direction and the position of the cover surface F12 in the c-axis direction may be different from each other. The cover surface F12 is located slightly at a relatively c2-directional position in comparison with the nozzle surface F11, although the illustration of this slight difference between their c2-directional positions is omitted in FIG. 3. The positional relationship described here makes the contact of an object with the nozzle surface F11 less likely to occur, thereby protecting the nozzle surface F11.

In the present embodiment, the constituent members forming the ejecting surface F1 are the nozzle plate 312 and the cover member 314. However, the constituent members forming the ejecting surface F1 are not limited to them. For example, if the casing portion 313 is larger in size than the cover member 314 in the a1 direction and/or the a2 direction, the portion of the casing portion 313 that is visible when viewed in the c1 direction will be included in the ejecting surface F1.

The plurality of nozzles N is grouped into a first nozzle row La and a second nozzle row Lb, which are arranged at a distance in the direction along the a axis from each other. Each of the first nozzle row La and the second nozzle row Lb is an example of "a nozzle row", specifically, a group of nozzles N arranged linearly in the direction along the b axis. Therefore, in the description below, the b axis may be referred to as "nozzle-row axis". The head 310 has a structure in which components related to the respective nozzles N of the first nozzle row La and components related to the respective nozzles N of the second nozzle row Lb are substantially symmetric to each other.

However, the respective positions of the plurality of nozzles N of the first nozzle row La and the respective positions of the plurality of nozzles N of the second nozzle row Lb may be the same as each other or different from each other. Components related to the respective nozzles N of either the first nozzle row La or the second nozzle row Lb may be omitted. In the example described below, it is assumed that the respective positions of the plurality of nozzles N of the first nozzle row La and the respective positions of the plurality of nozzles N of the second nozzle row Lb are the same as each other.

The energy emission unit 330 includes a window portion 331 and a casing portion 332. The casing portion 332 is a box-shaped member made of metal or the like. The window portion 331 is a member made of transparent glass or the like. The window portion 331 is provided on the c2-side face of the casing portion 332.

The energy emission unit 330 has an emitting surface F2, from which energy is emitted. The emitting surface F2 is the surface of a portion constituting the window portion 331 and a peripheral portion surrounding it. In another definition, the emitting surface F2 is the face that is visible when the energy emission unit 330 is viewed from the above-mentioned side toward which ink is ejected. The "portion constituting the window portion 331 and a peripheral portion surrounding it" means a portion on the c2-side where the window portion 331 is provided when the energy emission unit 330 is virtually halved with respect to the c-axis direction.

The emitting surface F2 may include a plurality of surfaces. The emitting surface F2 according to the present embodiment includes a window surface F21 and a casing surface F22. The window surface F21 is the surface, of the window portion 331, exposed to the outside. The casing surface F22 is the visible surface of the casing portion 332 when the casing portion 332 is viewed in the c1 direction.

**The** energy emission unit 330 according to the present embodiment is an ultraviolet ray lamp. Non-illustrated ultraviolet light emitting diodes (UV-LEDs) and non-illustrated reflectors are arranged inside the casing portion 332. Ultraviolet rays generated by the UV-LEDs are emitted from the window surface F21 in the c2 direction. That is, the c2 direction is the direction in which energy is emitted. The ultraviolet ray lamp generates heat when it emits light due to, for example, the electric resistance of electronic components and wiring provided inside.

In the present embodiment, the window portion 331 has a shape like a flat plate, and the direction of a line normal to the window surface F21 is the c2 direction. However, the shape of the window portion 331 is not limited to this example. For example, the window portion 331 may have a concave lens shape or a convex lens shape instead of a flat plate-like shape. In this case, the window surface F21 is curved. The shape of the casing portion 332 is also not limited to the disclosed example.

The position of the window surface F21 in the c-axis direction and the position of the casing surface F22 in the c-axis direction may be different from each other. The casing surface F22 is located slightly at a relatively c2-directional position in comparison with the window surface F21, although the illustration of this slight difference between their c2-directional positions is omitted in FIG. 3. The positional relationship described here makes the contact of an object with the window surface F21 less likely to occur, thereby protecting the window surface F21.

**The** distance measurement unit 360 includes a window portion 361 and a casing portion 362. The casing portion 362 is a box-shaped member made of metal, resin, or the like. The window portion 361 is a member made of transparent glass, transparent resin, or the like. The window portion 361 is provided on the c2-side face of the casing portion 362.

**The** distance measurement unit 360 has a measuring surface F3 for measuring a relative distance to the workpiece W. The measuring surface F3 is the surface of a portion constituting the window portion 361 and a peripheral portion surrounding it. In another definition, the measuring surface F3 is the face that is visible when the distance measurement unit 360 is viewed from the above-mentioned side toward which ink is ejected. The "portion constituting the window portion 361 and a peripheral portion surrounding it" means a portion on the c2-side where the window portion 361 is provided when the distance measurement unit 360 is virtually halved with respect to the c-axis direction.

The measuring surface F3 may include a plurality of surfaces. The measuring surface F3 includes a window surface F31 and a casing surface F32. The window surface F31 is the surface, of the window portion 361, exposed to the outside. The casing surface F32 is the visible surface of the casing portion 362 when the casing portion 362 is viewed in the c1 direction.

The distance measurement unit 360 according to the present embodiment is a laser displacement meter. A non-illustrated laser light source and non-illustrated light receiving elements are arranged inside the casing portion 362. A laser beam generated by the laser light source is emitted from the window portion 361. The emitted beam is reflected by the surface of an object to enter the window portion 361 again. Then, the incident beam is detected by the light receiving elements. The laser displacement meter is able to detect the distance between the distance measurement unit 360 and the surface of the workpiece W in the direction along the c axis in this way. That is, the c2 direction is the measuring direction of the distance measurement unit 360. The distance measurement unit 360 generates heat when it performs measurement due to, for example, the electric resistance of electronic components and wiring provided inside.

In the present embodiment, the window portion 361 has a shape like a flat plate, and the direction of a line normal to the window surface F31 is the c2 direction. However, the shape of the window portion 361 is not limited to this example. For example, the window portion 361 may have a concave lens shape or a convex lens shape, etc. instead of a flat plate-like shape. In this case, the window surface F31 is curved. The shape of the casing portion 362 is also not limited to the disclosed example. A plurality of windows is sometimes provided as the window portion 361.

The position of the window surface F31 in the c-axis direction and the position of the casing surface F32 in the c-axis direction may be different from each other. The casing surface F32 is located slightly at a relatively c2-directional position in comparison with the window surface F31, although the illustration of this slight difference between their c2-directional positions is omitted in FIG. 3. The positional relationship described here makes the contact of an object with the window surface F31 less likely to occur, thereby protecting the window surface F31.

Next, a positional relationship among the ejecting surface F1 of the head 310, the emitting surface F2 of the energy emission unit 330, the measuring surface F3 of the distance measurement unit 360 will now be explained.

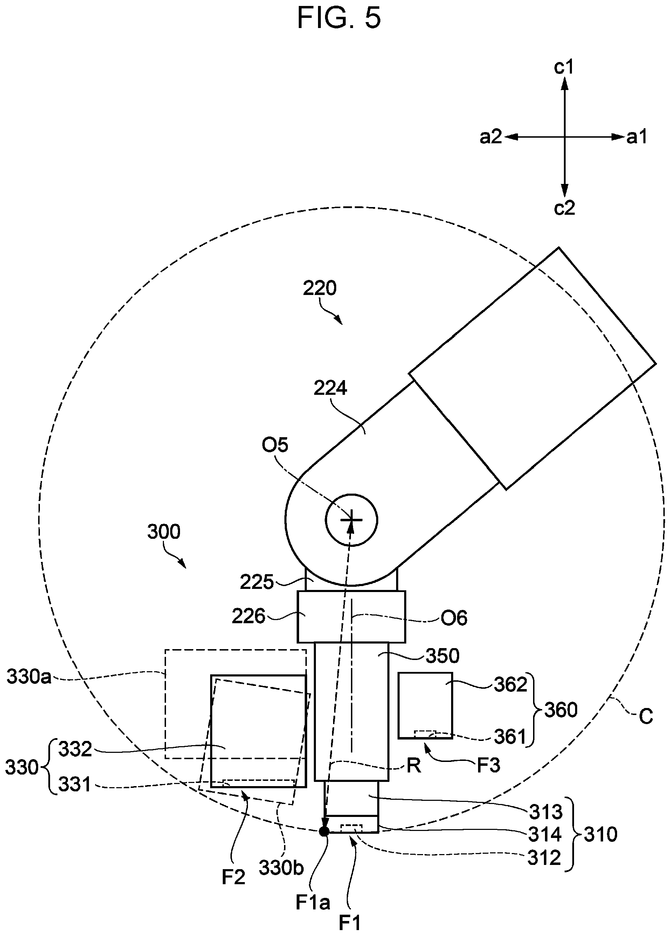

FIG. 5 is a side view depicting a positional relationship between the head unit 300 and the robot 200 according to the present embodiment. In this figure, the head 310, the energy emission unit 330, the distance measurement unit 360, and the support member 350 are illustrated when the head unit 300 is viewed in the b-axis direction. As described earlier, the support member 350 of the head unit 300 is mounted on the distal end of the arm unit 220, that is, on the arm 226.

As illustrated in FIGS. 3 and 5, the ejecting surface F1 of the head 310 is located at a relatively c2-directional position in comparison with the emitting surface F2 of the energy emission unit 330. In other words, the ejecting surface F1 is located closer to the side toward which ink is ejected than the emitting surface F2 is. In addition, the ejecting surface F1 of the head 310 is located at a relatively c2-directional position in comparison with the measuring surface F3 of the distance measurement unit 360. In other words, the ejecting surface F1 is located closer to the side toward which ink is ejected than the measuring surface F3 is.

The emitting surface F2 is located between the measuring surface F3 and the ejecting surface F1 in the c-axis direction. In addition, the distance between the emitting surface F2 and the ejecting surface F1 in the c-axis direction is shorter than the distance between the emitting surface F2 and the measuring surface F3 in the c-axis direction.

In FIG. 5, the fifth rotation axis O5, which is the rotation axis of the joint 230_5 of the arm unit 220, is substantially parallel to the aforementioned nozzle-row axis of the head 310. That is, the fifth rotation axis O5 is parallel to the b axis. This positional relationship between the arm unit 220 and the head 310 can be achieved by adjusting rotation around the sixth rotation axis O6 at the joint 230_6 where the arm 226 is rotated with respect to the arm 225. In the present embodiment, the nozzle-row axis is formed along the b axis, and the rotation axis of the joint 230_6 is parallel to the c axis.

Let R be the distance between the fifth rotation axis O5, which is parallel to the nozzle-row axis, and an edge F1a of the ejecting surface F1; given this definition of R, the emitting surface F2 is located inside a virtual circle C having its center axis along the fifth rotation axis O5 and having a radius equal to R as viewed in the direction of the nozzle-row axis as illustrated in FIG. 5. The measuring surface F3 is also located inside the virtual circle C described here. The edge F1a of the ejecting surface F1 means, of the ejecting surface F1, a portion that is most distant from the fifth rotation axis O5 when the head 310 is viewed in the direction of the nozzle-row axis. That is, the distance from the fifth rotation axis O5 to the edge F1a is longer than the distance from the fifth rotation axis O5 to the edge of the emitting surface F2 that is most distant from the fifth rotation axis O5 and is longer than the distance from the fifth rotation axis O5 to the edge of the measuring surface F3 that is most distant from the fifth rotation axis O5.

The position of the energy emission unit 330 and the position of the distance measurement unit 360 are not limited to the example illustrated in FIG. 5. It is sufficient as long as the emitting surface F2 and the measuring surface F3 are located inside the virtual circle C. That is, the position of the energy emission unit 330 may be adjusted depending on its size while ensuring that the emitting surface F2 is located inside the virtual circle C. For example, the energy emission unit 330 may be provided at a position 330a indicated by broken-line illustration in FIG. 5. The same holds true for the distance measurement unit 360.

The plurality of rotation axes of the arm unit 220 of the robot 200 includes at least one rotation axis orientable to be parallel to the nozzle-row axis. Among them, the fifth rotation axis O5 is the one that is closest to the head unit 300. The rotation axis satisfying the condition described here may be hereinafter referred to as "center rotation axis". That is, the virtual circle C is formed such that its center axis is the center rotation axis. The term "closest" mentioned here means the order in arm connection relationships in the arm unit 220.

The energy emission unit 330 may be inclined. For example, the energy emission unit 330 may be inclined in an orientation 330b indicated by broken-line illustration in FIG. 5 such that the emitting surface F2 is oriented gradually away from the position of the head 310.

As illustrated in FIG. 4, when the head unit 300 is viewed in the c1 direction, the ejecting surface F1 is located between the emitting surface F2 and the measuring surface F3 in the a-axis direction, that is, in the direction orthogonal to both the nozzle-row axis and the ejecting direction. The width W310 of the ejecting surface F1 in the a-axis direction is less than the width W330 of the emitting surface F2 in the a-axis direction. In addition, the width W310 of the ejecting surface F1 is less than the width 331 of the window surface F21.

As illustrated in FIG. 3, when the head unit 300 is viewed in the c-axis direction, the downstream flow passage 422 is located between the energy emission unit 330 and the distance measurement unit 360. In other words, the downstream flow passage 422 is interposed between the energy emission unit 330 and the distance measurement unit 360 in the a-axis direction.

As illustrated in FIG. 4, the b1-directional edge of the emitting surface F2 is not beyond the b1-directional edge of the ejecting surface F1 in the b1 direction when the head unit 300 is viewed in the c1 direction. In the present embodiment, the b1-directional edge of the ejecting surface F1 is located at the same position in the b1 direction as the b1-directional edge of the emitting surface F2. The b2-directional edge of the emitting surface F2 may be beyond, or not beyond, the b2-directional edge of the ejecting surface F1 in the b2 direction. In FIG. 4, the b2-directional edge of the emitting surface F2 is beyond the b2-directional edge of the ejecting surface F1 in the b2 direction. With this structure, the energy emission unit 330 is able to cure ink in a wide area range at a time in a curing operation described later. However, the edge portion of the emitting surface F2 protruding in the b2 direction might collide with the workpiece W in some instances. Therefore, if it is necessary to avoid such a collision, the b2-directional edge of the emitting surface F2 may be designed to be not beyond the b2-directional edge of the ejecting surface F1 in the b2 direction.

As illustrated in FIG. 4, among the plurality of nozzles N provided on the nozzle surface F11, ejection nozzles, which contribute to forming an image by ejecting ink at the time of printing, are not provided in any region located outside a region between the b1-directional edge and the b2-directional edge of the window surface F21 of the energy emission unit 330 in the b-axis direction. That is, the ejection nozzles are located between the b1-directional edge and the b2-directional edge of the window surface F21. The plurality of nozzles N provided on the nozzle surface F11 sometimes includes dummy nozzles, which do not eject ink at the time of printing and therefore do not contribute to forming an image. Such dummy nozzles do not have to be located between the b1-directional edge and the b2-directional edge of the window surface F21.

As illustrated in FIG. 4, the b1-directional edge of the measuring surface F3 is not beyond the b1-directional edge of the ejecting surface F1 in the b1 direction when the head unit 300 is viewed in the c1 direction. Similarly, the b2-directional edge of the measuring surface F3 is not beyond the b2-directional edge of the ejecting surface F1 in the b2 direction. That is, in the present embodiment, the position of the measuring surface F3 in the b-axis direction is between the b1-directional edge and the b2-directional edge of the ejecting surface F1. However, the b2-directional edge of the measuring surface F3 may be beyond the b2-directional edge of the ejecting surface F1 in the b2 direction.

### 1-4. Operation of Three-dimensional Object Printing Apparatus, and Three-dimensional Object Printing Method

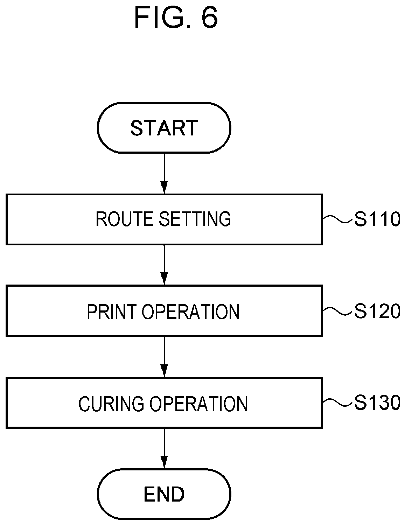

FIG. 6 is a flowchart illustrating the flow of a three-dimensional object printing method according to the first embodiment. The three-dimensional object printing method is performed using the three-dimensional object printing apparatus 100 described earlier. As illustrated in FIG. 6, the three-dimensional object printing apparatus 100 executes a step S110 of setting a route, a step S120 of performing a print operation, and a step S130 of performing a curing operation, sequentially in this order.

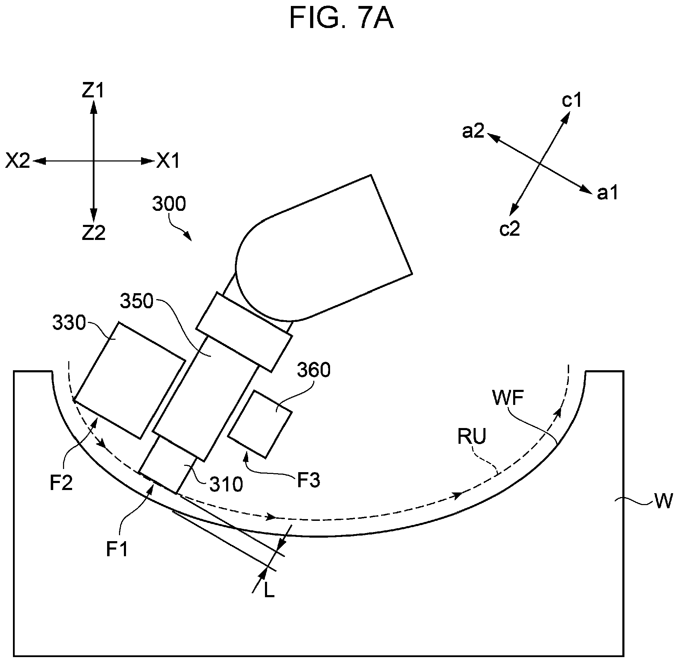

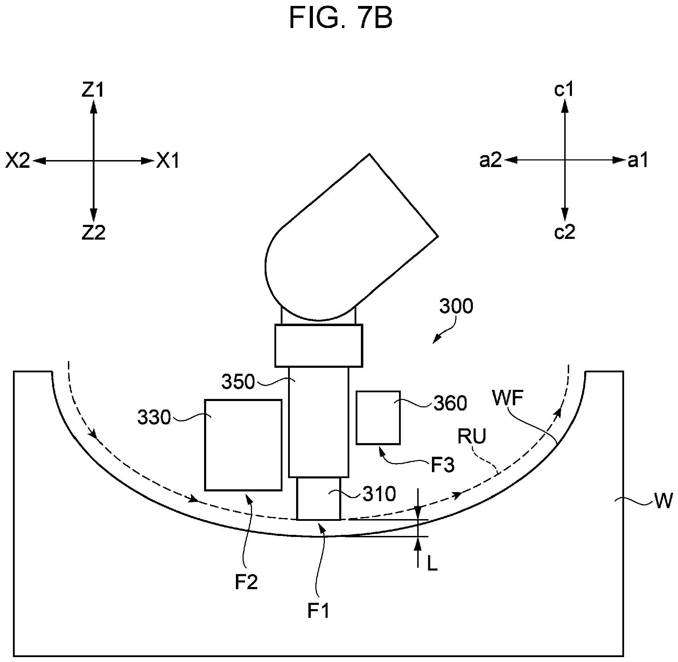

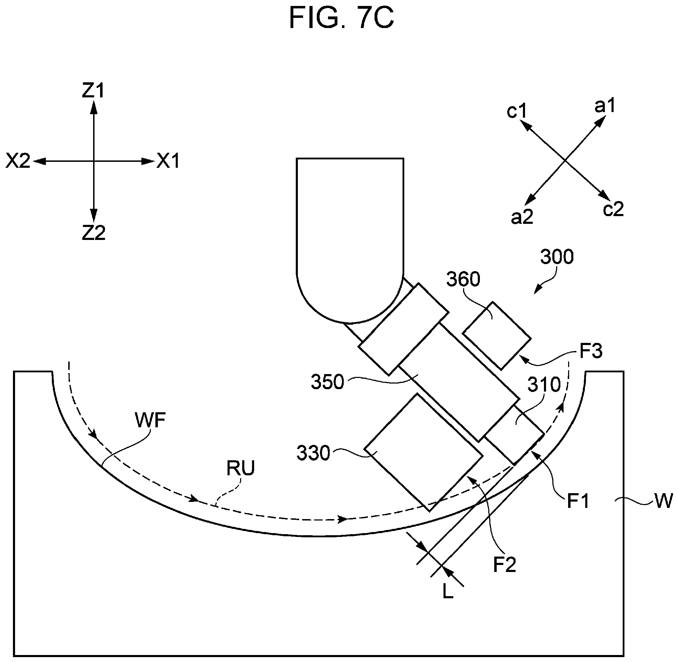

FIGS. 7A, 7B, and 7C constitute a set of diagrams for explaining the setting of a route and a print operation according to the first embodiment. The position and orientation of the head unit 300 changing in accordance with the lapse of time in the order of FIGS. 7A, 7B, and 7C are illustrated therein. The workpiece W according to the present embodiment has the surface WF, which is a recessed curved surface. Printing is performed on the surface WF by the three-dimensional object printing apparatus 100. The broken-line arrow in FIGS. 7A, 7B, and 7C represents a route RU and indicates the direction in which the head unit 300 moves on the route RU. That is, the moving direction indicated by this arrow is the direction in which the head unit 300 moves relatively along the workpiece W. This movement is performed by the robot 200.

In the step S110, based on workpiece information that indicates the position and shape of the workpiece W, the route RU is set as a path along which an internal representative point of the head unit 300 or a nearby representative point thereof should move. The representative point according to the present embodiment is set on the ejecting surface F1. Information about orientation in which the ejecting surface F1 should be is also included therein. The representative point described here corresponds to TCP (Tool Center Point) in robot teaching. Preferably, the route RU and its direction may be set along the surface WF. The orientation of the ejecting surface F1 and the direction in which the ejecting surface F1 moves change over the route RU in relation to the contour of the surface WF as the operation proceeds. By setting the route RU in this way, the computer 700 generates the route information Db described earlier. In the present embodiment, the route RU is set such that the head unit 300 will scan the surface WF substantially toward the X1 side.

The distance between the route RU and the surface WF is substantially constant, and the angle formed by the line normal to the ejecting surface F1 of the head 310 and the surface WF is substantially constant. Therefore, the distance L between the ejecting surface F1 and the surface WF in the direction of the line normal to the ejecting surface F1 is substantially constant throughout the entire range of the route RU. For this reason, it is possible to reduce errors in positions where ink droplets ejected from the head 310 land onto the surface WF. Moreover, in the example illustrated in FIGS. 7A, 7B, and 7C, the line normal to the ejecting surface F1 is orthogonal to, or is substantially orthogonal to, the surface WF. For this reason, it is easier to achieve high print quality as compared with a case where the line normal to the ejecting surface F1 is inclined with respect to the surface WF.

In the step S120, the head 310 ejects ink toward the surface WF of the workpiece W while the head unit 300 moves along the route RU, thereby performing printing. In this process, the a1 direction of the tool coordinate system described earlier is oriented in the direction of the route RU. That is, the head 310 moves in the direction orthogonal to both the nozzle-row axis and the ejecting direction. The distance measurement unit 360 is located in front of the head 310 in the moving direction. The head 310 is located in front of the energy emission unit 330 in the moving direction. In other words, in a print operation, the measuring surface F3 is located at a relatively moving-direction-side position in comparison with the ejecting surface F1. In addition, the ejecting surface F1 is located at a relatively moving-direction-side position in comparison with the emitting surface F2.

In the step S120, energy may be emitted from the energy emission unit 330 simultaneously with the movement of the head unit 300 and the ejection of ink by the head 310. That is, in the present embodiment, ultraviolet light may be applied to the surface WF so as to cure ink droplets having landed onto the surface WF.

In the step S120, the distance between the head unit 300 and the surface WF may be measured by the distance measurement unit 360 simultaneously with the movement of the head unit 300 and the ejection of ink by the head 310. That is, in the present embodiment, the distance between the head unit 300 and the surface WF may be measured by the distance measurement unit 360, and, based on the signal of the distance measurement unit 360, the robot 200 may be controlled so as to keep the distance L described above constant.

In the step S130, a curing operation for curing the ink droplets having landed onto the surface WF in the step S120 is performed. If energy was emitted from the energy emission unit 330 in the step S120 as described above and if the energy-applied ink has cured sufficiently and has become fixed onto the surface WF, the step S130 may be skipped. In the curing operation in the step S130, energy is emitted from the energy emission unit 330 while scanning the surface WF by the energy emission unit 330 by operating the robot 200. The route in the curing operation may be the same as or different from the route RU in the print operation. In the step S130, the curing operation may be performed by a non-illustrated curing unit provided separately from the energy emission unit 330.

As a result of executing the steps S110, S120, and S130 described above by the three-dimensional object printing apparatus 100, printing on the surface WF of the workpiece W using ink finishes.

In the present embodiment, a case where the head unit 300 includes both the energy emission unit 330 and the distance measurement unit 360 has been described. However, one of the energy emission unit 330 and the distance measurement unit 360 may be omitted. As an example of the former, if curable ink is not used, the energy emission unit 330 does not have to be provided. As an example of the latter, if the operation route of the robot 200 has been determined in advance, the distance measurement unit 360 does not have to be provided.

In the three-dimensional object printing apparatus 100 according to the present embodiment, the ejecting surface F1 of the head 310 is located at a relatively c2-directional position in comparison with the emitting surface F2 of the energy emission unit 330. In other words, the ejecting surface F1 is located closer to the side toward which ink is ejected than the emitting surface F2 is. This makes it possible to prevent the contact of the emitting surface F2 with the workpiece W when the relative position and orientation of the ejecting surface F1 in relation to the workpiece W is brought into desired position and orientation. In particular, when the ejecting surface F1 is brought closer to the workpiece W while the ejecting surface F1 and the surface WF of the workpiece W face each other, it is possible to bring the ejecting surface F1 to a position closer to the surface WF in the ejecting direction than the emitting surface F2 is. Therefore, it is possible to increase precision in positions where ink droplets ejected from the nozzles N of the head 310 land onto the surface WF, thereby achieving high print quality. Moreover, since the head unit 300 includes the energy emission unit 330 having the emitting surface F2, it is possible to apply energy to the ink droplets having landed onto the surface WF immediately, thereby curing the ink.

In the three-dimensional object printing apparatus 100 according to the present embodiment, the positional relationship between the ejecting surface F1 and the emitting surface F2 is fixed in the head unit 300. Therefore, for example, as compared with the structure of a head unit in which the positional relationship between the ejecting surface F1 and the emitting surface F2 is made variable by using a linear actuator, etc., the structure of the present embodiment is simpler, and its control is easier.

In the three-dimensional object printing apparatus 100 according to the present embodiment, in a state in which the fifth rotation axis O5 that is the center rotation axis is parallel to the nozzle-row axis, the emitting surface F2 and the measuring surface F3 are located inside a virtual circle C having its center at the fifth rotation axis O5 and having a radius equal to R, where R is defined as the distance between the fifth rotation axis O5 and the edge F1a of the ejecting surface F1 that is most distant from the fifth rotation axis O5 when the head 310 is viewed in the direction of the nozzle-row axis. Therefore, when the head unit 300 is rotated around the fifth rotation axis O5 from a printing positional state in which the ejecting surface F1 is positioned near the workpiece W in such a way as to face the workpiece W, it is possible to prevent the collision of the energy emission unit 330 or the distance measurement unit 360 with the workpiece W.

In the three-dimensional object printing apparatus 100 according to the present embodiment, the ejecting surface F1 of the head 310 is located at a relatively c2-directional position in comparison with the measuring surface F3 of the distance measurement unit 360. In other words, the ejecting surface F1 is located closer to the side toward which ink is ejected than the measuring surface F3 is. This makes it possible to prevent the contact of the measuring surface F3 with the workpiece W when the relative position and orientation of the ejecting surface F1 in relation to the workpiece W is brought into desired position and orientation. In particular, when the ejecting surface F1 is brought closer to the workpiece W while the ejecting surface F1 and the surface WF of the workpiece W face each other, it is possible to bring the ejecting surface F1 to a position closer to the surface WF in the ejecting direction than the measuring surface F3 is. Therefore, it is possible to increase precision in positions where ink droplets ejected from the nozzles N of the head 310 land onto the surface WF, thereby achieving high print quality. Moreover, since the head unit 300 includes a distance detector having the measuring surface F3, it is possible to measure the distance between the head unit 300 and the workpiece W accurately.

In the three-dimensional object printing apparatus 100 according to the present embodiment, the positional relationship between the ejecting surface F1 and the measuring surface F3 is fixed in the head unit 300. Therefore, for example, as compared with the structure of a head unit in which the positional relationship between the ejecting surface F1 and the measuring surface F3 is made variable by using a linear actuator, etc., the structure of the present embodiment is simpler, and its control is easier.

In the three-dimensional object printing apparatus 100 according to the present embodiment, the emitting surface F2 is located between the measuring surface F3 and the ejecting surface F1 in the ejecting direction. Because of this structure, ink droplets having landed onto the surface WF of the workpiece W are irradiated with energy emitted from the emitting surface F2 while the energy maintains sufficient intensity. Therefore, it is possible to cure the ink efficiently. In other words, a shorter distance between the surface WF and the emitting surface F2 makes it possible to reduce the attenuation of energy emitted from the emitting surface F2 during propagation till reaching the surface WF as compared with a case where the distance is long. Moreover, it is less frequent that the head unit 300 in its entirety has to be moved away from the workpiece W for the purpose of avoiding the contact of the measuring surface F3 and the workpiece W. Therefore, it is possible to increase precision in positions where ink droplets ejected from the nozzles N of the head 310 land onto the surface WF, thereby achieving high print quality. Moreover, ink droplets having landed onto the surface WF of the workpiece W are irradiated with energy emitted from the emitting surface F2 while the energy maintains sufficient intensity. Therefore, it is possible to cure the ink efficiently.

In the three-dimensional object printing apparatus 100 according to the present embodiment, the distance between the emitting surface F2 and the ejecting surface F1 in the ejecting direction is shorter than the distance between the measuring surface F3 and the ejecting surface F1 in the ejecting direction. Therefore, when the head unit 300 is brought to a position near the workpiece W, it is possible to make the distance between the ejecting surface F1 and the surface WF shorter than the distance between the measuring surface F3 and the surface WF and make the distance between the emitting surface F2 and the surface WF shorter than the distance between the measuring surface F3 and the surface WF. Moreover, it is less frequent that the head unit 300 in its entirety has to be moved away from the workpiece W for the purpose of avoiding the contact of the measuring surface F3 and the workpiece W. Therefore, it is possible to increase precision in positions where ink droplets ejected from the nozzles N of the head 310 land onto the surface WF, thereby achieving high print quality. Moreover, ink droplets having landed onto the surface WF of the workpiece W are irradiated with energy emitted from the emitting surface F2 while the energy maintains sufficient intensity. Therefore, it is possible to cure the ink efficiently.

For printing, the three-dimensional object printing apparatus 100 includes the plurality of nozzles N arranged on the ejecting surface F1 along the nozzle-row axis. In the a-axis direction, which is orthogonal to both the nozzle-row axis and the ejecting direction, the ejecting surface F1 is located between the emitting surface F2 and the measuring surface F3. The three-dimensional object printing apparatus 100 is capable of performing the following operations simultaneously: moving the head unit 300 by the robot 200; ejecting ink from the head 310 toward the surface WF of the workpiece W; and emitting energy from the energy emission unit 330.

As illustrated in FIGS. 7A, 7B, and 7C, the three-dimensional object printing apparatus 100 moves the head unit 300 in the a-axis direction, which is orthogonal to both the nozzle-row axis and the ejecting direction. When this print operation is performed, the measuring surface F3 scans the target area of the surface WF earlier than the ejecting surface F1 does because the measuring surface F3 is located at a relatively moving-direction-side position in comparison with the ejecting surface F1. Therefore, it is possible to measure the distance between this area and the head unit 300 by scanning this area of the surface WF using the measuring surface F3 first, and then eject ink from the head 310 by scanning this area of the surface WF using the ejecting surface F1. In this process, it is possible to perform control such that the distance L is kept constant based on the result of distance measurement. Moreover, it is possible to prevent the contact of this area of the surface WF and the ejecting surface F1. Furthermore, it is possible to complete distance measurement and ink ejection by a series of operations.

As illustrated in FIGS. 7A, 7B, and 7C, the three-dimensional object printing apparatus 100 moves the head unit 300 in the a-axis direction, which is orthogonal to both the nozzle-row axis and the ejecting direction. When this print operation is performed, the ejecting surface F1 scans the target area of the surface WF earlier than the emitting surface F2 does because the ejecting surface F1 is located at a relatively moving-direction-side position in comparison with the emitting surface F2. Therefore, it is possible to eject ink from the head 310 toward this area of the surface WF first, and then bring the emitting surface F2 closer to this area of the workpiece W where the ink droplets have landed. Therefore, it is possible to complete ink ejection and ink curing by energy irradiation by a series of operations.

When the head unit 300 is viewed from the side toward which ink is ejected, the downstream flow passage 422, which is a part of the supply flow passage 420 through which ink is supplied to the head 310, is located between the energy emission unit 330 and the distance measurement unit 360. The distance measurement unit 360 and the energy emission unit 330 generate heat when driven. Because of this structure, the heat generated from the distance measurement unit 360 and the energy emission unit 330 is transmitted to the downstream flow passage 422, which is located therebetween, and ink flowing through the downstream flow passage 422 is heated, resulting in a decrease in the viscosity of the ink. Therefore, it is possible to prevent poor ejection that might otherwise occur due to the clogging of the downstream flow passage 422 or other flow passages inside the head 310 with such viscosity-increased ink.

In the three-dimensional object printing apparatus 100 according to the present embodiment, the width W310 of the ejecting surface F1 in the a-axis direction, which is orthogonal to both the nozzle-row axis and the ejecting direction, is less than the width W330 of the emitting surface F2 in the a-axis direction. Therefore, even when the workpiece W has a recessed portion as in the example, this structure makes it easier to bring the ejecting surface F1 to a position near the recessed portion. Moreover, since the width W330 of the emitting surface F2 in the moving direction is relatively wide, the emitting surface F2 scans the surface WF of the workpiece W for a relatively long time when a print operation is performed. Therefore, after the ejection of ink from the head 310, it is possible to apply sufficient energy to the ink droplets having landed onto the surface WF, thereby curing the ink.

In the three-dimensional object printing apparatus 100 according to the present embodiment, the energy emission unit 330 may be disposed in an inclined orientation such that the emitting surface F2 is oriented away from the position of the head 310. This structure of the three-dimensional object printing apparatus 100 makes it unlikely that energy emitted from the emitting surface F2 will enter the ejecting surface F1. Therefore, it is possible to prevent poor ejection that might otherwise occur due to undesirable energy irradiation to ink on the ejecting surface F1 or to ink meniscuses in the nozzles N and due to resultant curing of the ink.

### 2. Second Embodiment

A second embodiment of the present disclosure will now be explained. In the exemplary embodiment described below, the same reference numerals as those used in the description of the first embodiment are assigned to elements that are the same in operation and/or function as those in the first embodiment, and a detailed explanation of them is omitted.

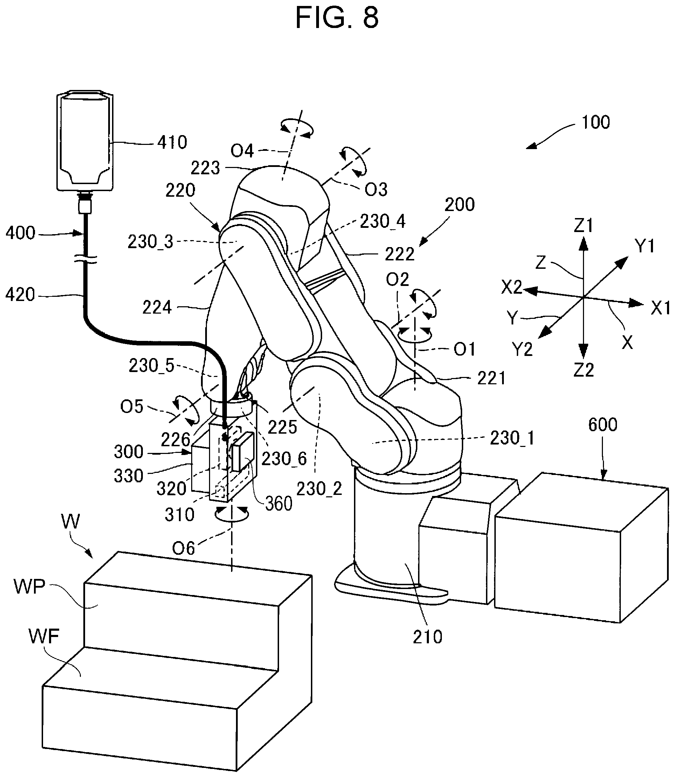

FIG. 8 is a schematic perspective view of the three-dimensional object printing apparatus 100 and the workpiece W according to a second embodiment. The structure of the three-dimensional object printing apparatus 100 according to the present embodiment is the same as that of the first embodiment. The workpiece W according to the present embodiment has a protruding portion WP that protrudes in the Z1 direction. The surface WF, which is the print target area, adjoins the protruding portion WP at a relatively Y2-side position. The protruding portion WP extends along the X axis. The size, shape, placement orientation, etc. of the workpiece W is not limited to the example illustrated in FIG. 8. The workpiece W may have any size, shape, placement orientation, etc.

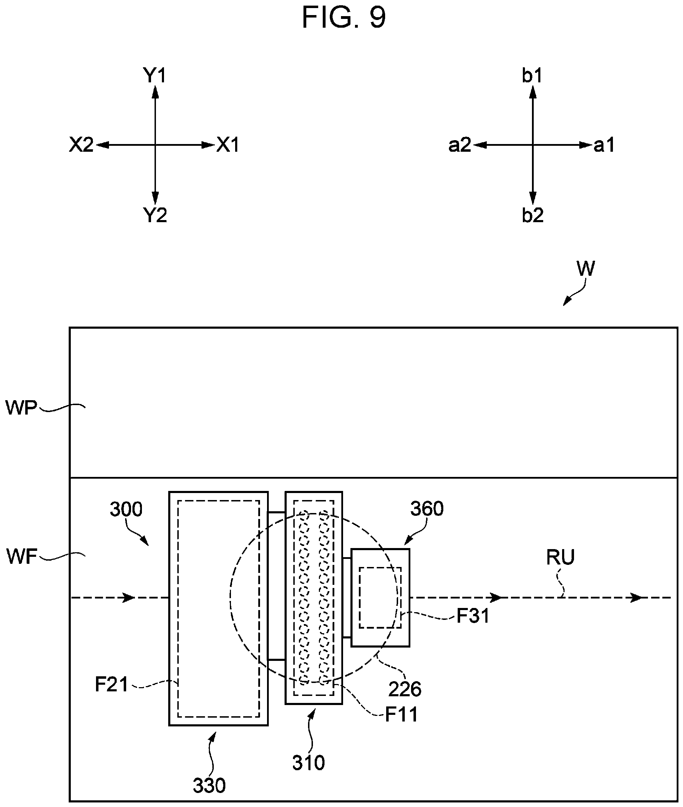

FIG. 9 is a plan view for explaining the setting of a route and a print operation according to the second embodiment. In the present embodiment, the orientation setting of the head unit 300 on the route RU is made such that, at a Z1-side position in relation to the workpiece W, the ejecting surface F1 faces the surface WF, and the b1 direction of the tool coordinate system is oriented toward the protruding portion WP. The moving direction along the route RU is the X1 direction of the base coordinate system. The a1 direction of the tool coordinate system is parallel to the X1 direction. The head unit 300 operated by the robot 200 moves along the route RU. The head 310 ejects ink toward the surface WF of the workpiece W while the head unit 300 moves along the route RU. A print operation is performed in this way.

The b1-directional edge of the emitting surface F2 is not beyond the b1-directional edge of the ejecting surface F1 in the b1 direction when the head unit 300 is viewed in the c2 direction. In the present embodiment, the b1-directional edge of the ejecting surface F1 is located at the same position in the b1 direction as the b1-directional edge of the emitting surface F2. This structure of the head unit 300 makes it possible to prevent the emitting surface F2 from colliding with the protruding portion WP when printing is performed on, of the surface WF, an area adjoining the protruding portion WP. The b1-directional edge of the ejecting surface F1 may be beyond the b1-directional edge of the emitting surface F2 in the b1 direction.

The b2-directional edge of the emitting surface F2 may be beyond the b2-directional edge of the ejecting surface F1 in the b2 direction when the head unit 300 is viewed in the c2 direction. This is because the b2-directional edge does not face the protruding portion WP and because, therefore, no collision occurs. However, if an obstacle such as another protruding portion of the workpiece W is provided on the b2 side, the b2-directional edge of the emitting surface F2 may be designed to be not beyond the b2-directional edge of the ejecting surface F1 in the b2 direction.

In the present embodiment, the b-directional edge of the measuring surface F3 is not beyond the b-directional edge of the ejecting surface F1 when the head unit 300 is viewed in the c2 direction. Alternatively, the b-directional edge of the measuring surface F3 may be located at the same position as the b-directional edge of the ejecting surface F1. Regardless of whether at the same position or not, it is sufficient as long as the b-directional edge of the measuring surface F3 is not beyond the b-directional edge of the ejecting surface F1 in the b1 direction or the b2 direction. It will be more preferable if the b-directional edges of the measuring surface F3 are not beyond the b-directional edges of the ejecting surface F1 in both the b1 direction and the b2 direction. This structure of the head unit 300 makes it possible to prevent the measuring surface F3 from colliding with the protruding portion WP when printing is performed on, of the surface WF, an area adjoining the protruding portion WP. It will be preferable if the direction in which the edge of the emitting surface F2 is not beyond the edge of the ejecting surface F1 along the b axis and the direction in which the edge of the measuring surface F3 is not beyond the edge of the ejecting surface F1 along the b axis match.

### 3. Third Embodiment

A third embodiment of the present disclosure will now be explained. In the exemplary embodiment described below, the same reference numerals as those used in the description of the first embodiment are assigned to elements that are the same in operation and/or function as those in the first embodiment, and a detailed explanation of them is omitted.

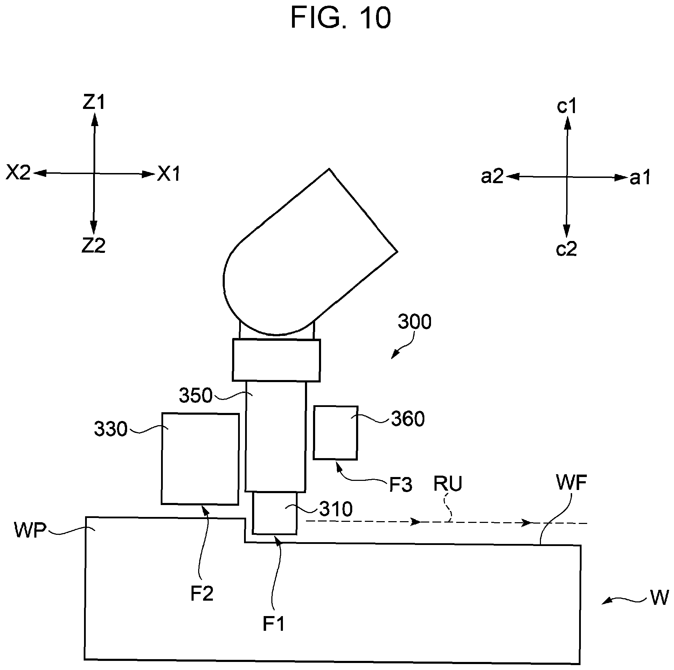

FIG. 10 is a schematic side view of the head unit 300 and the workpiece W according to a third embodiment. The structure of the three-dimensional object printing apparatus 100 according to the present embodiment is the same as that of the first embodiment. The workpiece W according to the present embodiment has a protruding portion WP that protrudes in the Z1 direction. The surface WF, which is the print target area, adjoins the protruding portion WP at a relatively X1-side position. The protruding portion WP extends along the Y axis. The size, shape, placement orientation, etc. of the workpiece W is not limited to the example illustrated in FIG. 10. The workpiece W may have any size, shape, placement orientation, etc.

As illustrated in FIG. 10, in the present embodiment, the orientation setting of the head unit 300 on the route RU is made such that, at a Z1-side position in relation to the workpiece W, the ejecting surface F1 faces the surface WF, and the a2 direction is oriented toward the protruding portion WP, and the a1-directional side is on the surface WF side. The moving direction of the head unit 300 along the route RU is the X1 direction of the base coordinate system. The a axis of the tool coordinate system is parallel to the X axis. The head unit 300 operated by the robot 200 moves along the route RU. The head 310 ejects ink toward the surface WF of the workpiece W while the head unit 300 moves along the route RU. A print operation is performed in this way.

In a three-dimensional object printing method according to the present embodiment, when ink is ejected from the head 310 with the ejecting surface F1 facing the surface WF, the emitting surface F2 overlaps with the protruding portion WP as viewed in the ejecting direction. The ejecting direction is the c2 direction. When this operation is performed, as illustrated in FIG. 10, at least a part of the protruding portion WP is located between the ejecting surface F1 and the emitting surface F2 in the c-axis direction.

The three-dimensional object printing method described above makes it less frequent that the head unit 300 in its entirety has to be moved away from the workpiece W for the purpose of avoiding the contact of the emitting surface F2 and the workpiece W. In particular, even when the print target area of the workpiece W adjoins the protruding portion WP, it is possible to bring the ejecting surface F1 to a position near the print target area of the workpiece W while preventing the contact of the emitting surface F2 and the workpiece W. Therefore, it is possible to increase precision in positions where ink droplets ejected from the nozzles N of the head 310 land onto the surface WF, thereby enhancing print quality.

## Claims

1. A three-dimensional object printing apparatus (100), comprising:
a head unit (300) that includes a head (310) and a curing unit (330), the head having an ejecting surface (F1) on which a nozzle (N) is provided, the head being configured to eject liquid from the nozzle toward a three-dimensional workpiece, the curing unit having an emitting surface (F2) from which energy for curing the liquid is emitted; and
a movement mechanism (200) that changes relative position and relative orientation of the workpiece and the head unit; wherein
when a direction (c2) in which the head ejects the liquid is defined as an ejecting direction, the ejecting surface is located closer to an ejecting direction side, which is a side toward which the ejecting direction goes, than the emitting surface is, and wherein
a plurality of nozzles (N) is provided along a nozzle-row axis on the ejecting surface,
the movement mechanism includes a plurality of rotation axes that includes at least one rotation axis orientable to be parallel to the nozzle-row axis,
among the at least one rotation axis orientable to be parallel to the nozzle-row axis, one rotation axis closest to the head unit is defined as a center rotation axis, and
in a state in which the center rotation axis and the nozzle-row axis are parallel to each other, the emitting surface is located inside a virtual circle (C) having a center at the center rotation axis and having a radius equal to R, where R is defined as a distance between the center rotation axis and an edge of the ejecting surface that is most distant from the center rotation axis when the head is viewed in a direction of the nozzle-row axis.

2. The three-dimensional object printing apparatus (100) according to claim 1, wherein
a positional relationship between the ejecting surface (F1) and the emitting surface (F2) is fixed in the head unit (300).

3. The three-dimensional object printing apparatus (100) according to claim 1, wherein
the head unit (300) further includes a distance measurement unit (360) that has a measuring surface for measuring a relative distance to the workpiece, and
the ejecting surface (F1) is located closer to the ejecting direction side than the measuring surface is.

4. A three-dimensional object printing apparatus (100), comprising:
a head unit (300) that includes a head and a distance measurement unit (360), the head having an ejecting surface (F1) on which a nozzle (N) is provided, the head being configured to eject liquid from the nozzle toward a three-dimensional workpiece, the distance measurement unit having a measuring surface (F3) for measuring a relative distance to the workpiece; and
a movement mechanism (200) that changes relative position and relative orientation of the workpiece and the head unit; wherein
when a direction (c2) in which the head ejects the liquid is defined as an ejecting direction, the ejecting surface is located closer to an ejecting direction side, which is a side toward which the ejecting direction goes, than the measuring surface is, and wherein
a plurality of nozzles (N) is provided along a nozzle-row axis on the ejecting surface,
the movement mechanism includes a plurality of rotation axes that includes at least one rotation axis orientable to be parallel to the nozzle-row axis,
among the at least one rotation axis orientable to be parallel to the nozzle-row axis, one rotation axis closest to the head unit is defined as a center rotation axis, and in a state in which the center rotation axis and the nozzle-row axis are parallel to each other, the measuring surface is located inside a virtual circle (C) having a center at the center rotation axis and having a radius equal to R, where R is defined as a distance between the center rotation axis and an edge of the ejecting surface that is most distant from the center rotation axis when the head is viewed in a direction of the nozzle-row axis.

5. The three-dimensional object printing apparatus (100) according to claim 4, wherein
a positional relationship between the ejecting surface (F1) and the measuring surface is fixed in the head unit (300).

6. The three-dimensional object printing apparatus (100) according to claim 4, wherein
the head unit (300) further includes a curing unit that has an emitting surface (F2) from which energy for curing the liquid is emitted, and
the ejecting surface (F1) is located closer to the ejecting direction side than the emitting surface is.

7. The three-dimensional object printing apparatus (100) according to claim 3, wherein
the emitting surface (F2) is located between the measuring surface and the ejecting surface (F1) in the ejecting direction.

8. The three-dimensional object printing apparatus (100) according to claim 3, wherein
a distance between the emitting surface (F2) and the ejecting surface (F1) in the ejecting direction is shorter than a distance between the measuring surface and the ejecting surface in the ejecting direction.

9. The three-dimensional object printing apparatus (100) according to claim 3, wherein
in a direction orthogonal to both the nozzle-row axis and the ejecting direction, the ejecting surface is located between the emitting surface (F2) and the measuring surface.

10. The three-dimensional object printing apparatus (100) according to claim 1, wherein
in a direction orthogonal to both the nozzle-row axis and the ejecting direction, a width of the ejecting surface is less than a width of the emitting surface (F2).

11. The three-dimensional object printing apparatus (100) according to claim 1, wherein
on at least one side of a direction along the nozzle-row axis, an edge of the emitting surface (F2) is not beyond an edge of the ejecting surface.

12. The three-dimensional object printing apparatus (100) according to claim 4, wherein
on at least one side of a direction along the nozzle-row axis, an edge of the measuring surface is not beyond an edge of the ejecting surface.

13. The three-dimensional object printing apparatus (100) according to claim 1, wherein the movement mechanism is an articulated robot that has a plurality of joints.

## Patentansprüche

1. Vorrichtung (100) zum Drucken dreidimensionaler Objekte, umfassend:
eine Kopfeinheit (300), die einen Kopf (310) und eine Härtungseinheit (330) enthält, wobei der Kopf eine Ausstoßoberfläche (F1) aufweist, auf der eine Düse (N) bereitgestellt ist, wobei der Kopf eingerichtet ist, Flüssigkeit aus der Düse zu einem dreidimensionalen Werkstück auszustoßen, wobei die Härtungseinheit eine emittierende Oberfläche (F2) aufweist, aus der Energie zum Härten der Flüssigkeit emittiert wird; und
einen Bewegungsmechanismus (200), der relative Position und relative Ausrichtung des Werkstücks und der Kopfeinheit ändert; wobei
wenn eine Richtung (C2), in der der Kopf die Flüssigkeit ausstößt, als eine Ausstoßrichtung definiert ist, die Ausstoßoberfläche näher an einer Ausstoßrichtungsseite liegt, die eine Seite ist, in die die Ausstoßrichtung geht, als die emittierende Oberfläche, und wobei
mehrere Düsen (N) entlang einer Düsenreihenachse auf der Ausstoßoberfläche bereitgestellt sind,
der Bewegungsmechanismus mehrere Drehachsen enthält, die mindestens eine Drehachse enthalten, die so ausrichtbar ist, dass sie zu der Düsenreihenachse parallel ist,
von der mindestens einen Drehachse, die so ausrichtbar ist, dass sie zu der Düsenreihenachse parallel ist, eine Drehachse, die der Kopfeinheit am nächsten ist, als eine mittige Drehachse definiert ist, und
in einem Zustand, in dem die mittige Drehachse und die Düsenreihenachse parallel zueinander sind, die emittierende Oberfläche innerhalb eines virtuellen Kreises (C) mit einem Mittelpunkt an der mittigen Drehachse liegt und einen Radius gleich R aufweist, wo R als ein Abstand zwischen der mittigen Drehachse und einem Rand der Ausstoßoberfläche definiert ist, der am weitesten von der mittigen Drehachse entfernt ist, wenn der Kopf in einer Richtung der Düsenreihenachse betrachtet wird.

2. Vorrichtung (100) zum Drucken dreidimensionaler Objekte nach Anspruch 1, wobei
ein Positionsverhältnis zwischen der Ausstoßoberfläche (F1) und der emittierenden Oberfläche (F2) in der Kopfeinheit (300) festgelegt ist.

3. Vorrichtung (100) zum Drucken dreidimensionaler Objekte nach Anspruch 1, wobei
die Kopfeinheit (300) weiter eine Abstandsmesseinheit (360) enthält, die eine Messoberfläche zum Messen eines relativen Abstands zu dem Werkstück aufweist, und
die Ausstoßoberfläche (F1) näher bei der Ausstoßrichtungsseite liegt als die Messoberfläche.

4. Vorrichtung (100) zum Drucken dreidimensionaler Objekte, umfassend:
eine Kopfeinheit (300), die einen Kopf und eine Abstandsmesseinheit (360) enthält, wobei der Kopf eine Ausstoßoberfläche (F1) aufweist, auf der eine Düse (N) bereitgestellt ist, wobei der Kopf eingerichtet ist, Flüssigkeit aus der Düse zu einem dreidimensionalen Werkstück auszustoßen, wobei die Abstandsmesseinheit eine Messoberfläche (F3) zum Messen eines relativen Abstands zu dem Werkstück aufweist
einen Bewegungsmechanismus (200), der relative Position und relative Ausrichtung des Werkstücks und der Kopfeinheit ändert; wobei
wenn eine Richtung (C2), in der der Kopf die Flüssigkeit ausstößt, als eine Ausstoßrichtung definiert ist, die Ausstoßoberfläche näher an einer Ausstoßrichtungsseite liegt, die eine Seite ist, in die die Ausstoßrichtung geht, als die Messoberfläche, und wobei
mehrere Düsen (N) entlang einer Düsenreihenachse auf der Ausstoßoberfläche bereitgestellt sind,
der Bewegungsmechanismus mehrere Drehachsen enthält, die mindestens eine Drehachse enthalten, die so ausrichtbar ist, dass sie zu der Düsenreihenachse parallel ist,
von der mindestens einen Drehachse, die so ausrichtbar ist, dass sie zu der Düsenreihenachse parallel ist, eine Drehachse, die der Kopfeinheit am nächsten ist, als eine mittige Drehachse definiert ist, und in einem Zustand, in dem die mittige Drehachse und die Düsenreihenachse parallel zueinander sind, die Messoberfläche innerhalb eines virtuellen Kreises (C) mit einem Mittelpunkt an der mittigen Drehachse liegt und einen Radius gleich R aufweist, wo R als ein Abstand zwischen der mittigen Drehachse und einem Rand der Ausstoßoberfläche definiert ist, der am weitesten von der mittigen Drehachse entfernt ist, wenn der Kopf in einer Richtung der Düsenreihenachse betrachtet wird.

5. Vorrichtung (100) zum Drucken dreidimensionaler Objekte nach Anspruch 4, wobei
ein Positionsverhältnis zwischen der Ausstoßoberfläche (F1) und der Messoberfläche in der Kopfeinheit (300) festgelegt ist.

6. Vorrichtung (100) zum Drucken dreidimensionaler Objekte nach Anspruch 4, wobei
die Kopfeinheit (300) weiter eine Härtungseinheit enthält, die eine emittierende Oberfläche (F2) aufweist, aus der Energie zum Härten der Flüssigkeit emittiert wird, und
die Ausstoßoberfläche (F1) näher an der Ausstoßrichtungsseite liegt als die emittierende Oberfläche.

7. Vorrichtung (100) zum Drucken dreidimensionaler Objekte nach Anspruch 3 wobei
die emittierende Oberfläche (F2) zwischen der Messoberfläche und der Ausstoßfläche (F1) in der Ausstoßrichtung liegt.

8. Vorrichtung (100) zum Drucken dreidimensionaler Objekte nach Anspruch 3 wobei
ein Abstand zwischen der emittierenden Oberfläche (F2) und der Ausstoßoberfläche (F1) in der Ausstoßrichtung kürzer ist als ein Abstand zwischen der Messoberfläche und der Ausstoßoberfläche in der Ausstoßrichtung.

9. Vorrichtung (100) zum Drucken dreidimensionaler Objekte nach Anspruch 3, wobei
in einer Richtung orthogonal zu sowohl der Düsenreihenachse als auch der Ausstoßrichtung die Ausstoßoberfläche zwischen der emittierenden Oberfläche (F2) und der Messoberfläche liegt.

10. Vorrichtung (100) zum Drucken dreidimensionaler Objekte nach Anspruch 1, wobei
in einer Richtung orthogonal zu sowohl der Düsenreihenachse als auch der Ausstoßrichtung eine Breite der Ausstoßoberfläche kleiner ist als eine Breite der emittierenden Oberfläche (F2).

11. Vorrichtung (100) zum Drucken dreidimensionaler Objekte nach Anspruch 1, wobei
an mindestens einer Seite einer Richtung entlang der Düsenreihenachse ein Rand der emittierenden Oberfläche (F2) nicht über einen Rand der Ausstoßoberfläche hinausgeht.

12. Vorrichtung (100) zum Drucken dreidimensionaler Objekte nach Anspruch 4, wobei
an mindestens einer Seite einer Richtung entlang der Düsenreihenachse ein Rand der Messoberfläche nicht über einen Rand der Ausstoßoberfläche hinausgeht.

13. Vorrichtung (100) zum Drucken dreidimensionaler Objekte nach Anspruch 1, wobei der Bewegungsmechanismus ein gelenkiger Roboter ist, der mehrere Gelenke aufweist.

## Revendications

1. Appareil d'impression d'objets tridimensionnels (100), comprenant :
une unité de tête (300) incluant une tête (310) et une unité de durcissement (330), la tête comportant une surface d'éjection (F1) sur laquelle est disposée une buse (N), la tête étant configurée pour éjecter du liquide à partir de la buse vers une pièce usinée tridimensionnelle, l'unité de durcissement comportant une surface d'émission (F2) à partir de laquelle est émise de l'énergie destinée au durcissement du liquide ; et
un mécanisme de déplacement (200) modifiant la position relative et l'orientation relative de la pièce usinée et de l'unité de tête ; dans lequel
lorsqu'une direction (c2) dans laquelle la tête éjecte le liquide est définie comme une direction d'éjection, la surface d'éjection se trouve plus près d'un côté de direction d'éjection, consistant en un côté vers lequel s'étend la direction d'éjection, que la surface d'émission, et dans lequel
une pluralité de buses (N) sont disposées le long d'un axe de rangée de buses sur la surface d'éjection,
le mécanisme de déplacement inclut une pluralité d'axes de rotation incluant au moins un axe de rotation orientable de manière à être parallèle à l'axe de rangée de buses,
parmi les au moins un axes de rotation orientables de manière à être parallèles à l'axe de rangée de buses, un axe de rotation le plus proche de l'unité de tête est défini comme axe de rotation central, et
dans un état dans lequel l'axe de rotation central et l'axe de rangée de buses sont parallèles entre eux, la surface d'émission se trouve à l'intérieur d'un cercle virtuel (C) présentant un centre au niveau de l'axe de rotation central et présentant un rayon égal à R, où R est défini comme une distance entre l'axe de rotation central et un bord de la surface d'éjection le plus éloigné de l'axe de rotation central lorsque la tête est vue dans une direction de l'axe de rangée de buses.

2. Appareil d'impression d'objets tridimensionnels (100) selon la revendication 1, dans lequel
une relation de position entre la surface d'éjection (F1) et la surface d'émission (F2) est fixée dans l'unité de tête (300).

3. Appareil d'impression d'objets tridimensionnels (100) selon la revendication 1, dans lequel
l'unité de tête (300) inclut en outre une unité de mesure de distance (360) comportant une surface de mesure pour la mesure d'une distance relative par rapport à la pièce usinée, et
la surface d'éjection (F1) se trouve plus près du côté de direction d'éjection que la surface de mesure.

4. Appareil d'impression d'objets tridimensionnels (100), comprenant :
une unité de tête (300) incluant une tête et une unité de mesure de distance (360), la tête comportant une surface d'éjection (F1) sur laquelle est disposée une buse (N), la tête étant configurée pour éjecter du liquide à partir de la buse vers une pièce usinée tridimensionnelle, l'unité de mesure de distance comportant une surface de mesure (F3) pour la mesure d'une distance relative par rapport à la pièce usinée ; et
un mécanisme de déplacement (200) modifiant la position relative et l'orientation relative de la pièce usinée et de l'unité de tête ; dans lequel
lorsqu'une direction (c2) dans laquelle la tête éjecte le liquide est définie comme une direction d'éjection, la surface d'éjection se trouve plus près d'un côté de direction d'éjection, consistant en un côté vers lequel s'étend la direction d'éjection, que la surface de mesure, et dans lequel
une pluralité de buses (N) sont disposées le long d'un axe de rangée de buses sur la surface d'éjection,
le mécanisme de déplacement inclut une pluralité d'axes de rotation incluant au moins un axe de rotation orientable de manière à être parallèle à l'axe de rangée de buses,
parmi les au moins un axes de rotation orientables de manière à être parallèles à l'axe de rangée de buses, un axe de rotation le plus proche de l'unité de tête est défini comme axe de rotation central, et dans un état dans lequel l'axe de rotation central et l'axe de rangée de buses sont parallèles entre eux, la surface de mesure se trouve à l'intérieur d'un cercle virtuel (C) présentant un centre au niveau de l'axe de rotation central et présentant un rayon égal à R, où R est défini comme une distance entre l'axe de rotation central et un bord de la surface d'éjection le plus éloigné de l'axe de rotation central lorsque la tête est vue dans une direction de l'axe de rangée de buses.

5. Appareil d'impression d'objets tridimensionnels (100) selon la revendication 4, dans lequel
une relation de position entre la surface d'éjection (F1) et la surface de mesure est fixée dans l'unité de tête (300).

6. Appareil d'impression d'objets tridimensionnels (100) selon la revendication 4, dans lequel
l'unité de tête (300) inclut en outre une unité de durcissement comportant une surface d'émission (F2) à partir de laquelle est émise de l'énergie destinée à durcir le liquide, et
la surface d'éjection (F1) se trouve plus près du côté de direction d'éjection que la surface d'émission.

7. Appareil d'impression d'objets tridimensionnels (100) selon la revendication 3, dans lequel
la surface d'émission (F2) se trouve entre la surface de mesure et la surface d'éjection (F1) dans la direction d'éjection.

8. Appareil d'impression d'objets tridimensionnels (100) selon la revendication 3, dans lequel
une distance entre la surface d'émission (F2) et la surface d'éjection (F1) dans la direction d'éjection est plus courte qu'une distance entre la surface de mesure et la surface d'éjection dans la direction d'éjection.

9. Appareil d'impression d'objets tridimensionnels (100) selon la revendication 3, dans lequel
dans une direction orthogonale à la fois à l'axe de rangée de buses et à la direction d'éjection, la surface d'éjection se trouve entre la surface d'émission (F2) et la surface de mesure.

10. Appareil d'impression d'objets tridimensionnels (100) selon la revendication 1, dans lequel
dans une direction orthogonale à la fois à l'axe de rangée de buses et à la direction d'éjection, une largeur de la surface d'éjection est inférieure à une largeur de la surface d'émission (F2).

11. Appareil d'impression d'objets tridimensionnels (100) selon la revendication 1, dans lequel
sur au moins un côté d'une direction le long de l'axe de rangée de buses, un bord de la surface d'émission (F2) ne s'étend pas au-delà d'un bord de la surface d'éjection.

12. Appareil d'impression d'objets tridimensionnels (100) selon la revendication 4, dans lequel
sur au moins un côté d'une direction le long de l'axe de rangée de buses, un bord de la surface de mesure ne s'étend pas au-delà d'un bord de la surface d'éjection.

13. Appareil d'impression d'objets tridimensionnels (100) selon la revendication 1, dans lequel
le mécanisme de déplacement est un robot articulé comportant une pluralité d'articulations.
